# EUROPEAN PATENT APPLICATION

(11) **EP 1 607 265 A2**
(43) Date of publication of application: **21.12.2005**
(21) Application number: 05105194.4
(22) Date of filing: 14.06.2005
(51) Int. Cl.: B60N 2/48

(54) **Pneumatically positioned headrest**

(30) Priority: 16.06.2004 IT TO20040403; 24.01.2005 IT TO20050036
(71) Applicant: Coccoli, Oreste Massimo, 10121 Torino (IT)
(72) Inventor: Coccoli, Oreste Massimo, 10121 Torino (IT)
(74) Representative: Serra, Francesco

(57) **Abstract**

There is described a headrest (A) with pneumatic positioning by means of an inflation device (10).

## Description

The present invention relates to a headrest with pneumatic positioning.

The object of the present invention is to provide headrests which, when not in use, are arranged or incorporated in/on the seat back of a seat and, when necessary, are positioned at the desired height for use.

The headrests to which the present invention relates may be of the inflatable type, of the rigid type or of the semirigid type, as will be explained below.

The term seat is intended to refer to any object which is intended to provide support for a person in a seated position, for example, armchairs, settees, small chairs, for a theatre, cinema or meeting room.

The seats mentioned above comprise a seat member and a seat back which are either fixed or which have seat backs and/or seat members which can be reclined/folded; in particular, they may advantageously also be used, in addition to use in theatres, cinemas and meeting rooms, in land, air and sea transport means.

The present invention achieves the above-mentioned objects by means of a headrest with pneumatic positioning, for seats, having the features referred to in a specific manner in the appended claims.

Other features and advantages of the present invention will become clear from the following detailed description which is given by way of non-limiting example with reference to the appended drawings, in which:
- Figure 1 is a first embodiment of the headrest according to the invention;
- Figure 2 is a second embodiment of the headrest to which the present invention relates;
- Figure 3 is a third embodiment of the headrest to which the present invention relates;
- Figure 4 is a fourth embodiment of the headrest to which the present invention relates; and
- Figure 5 is a fifth embodiment of the headrest to which the present invention relates.

With reference to the Figures, in which identical or similar elements have been indicated with the same reference numerals, a seat which is provided with the headrest, to which the present invention relates, is generally designated 1.

The seat member of the seat is designated 2 and the backrest of the seat is designated 4.

A pressure device designated 6 can detect whether the seat member 2 of the seat 1 is occupied by an occupant for the reasons which will be explained below.

The device 6 is connected to an actuator 8 which actuates an inflation or topping-up device 10.

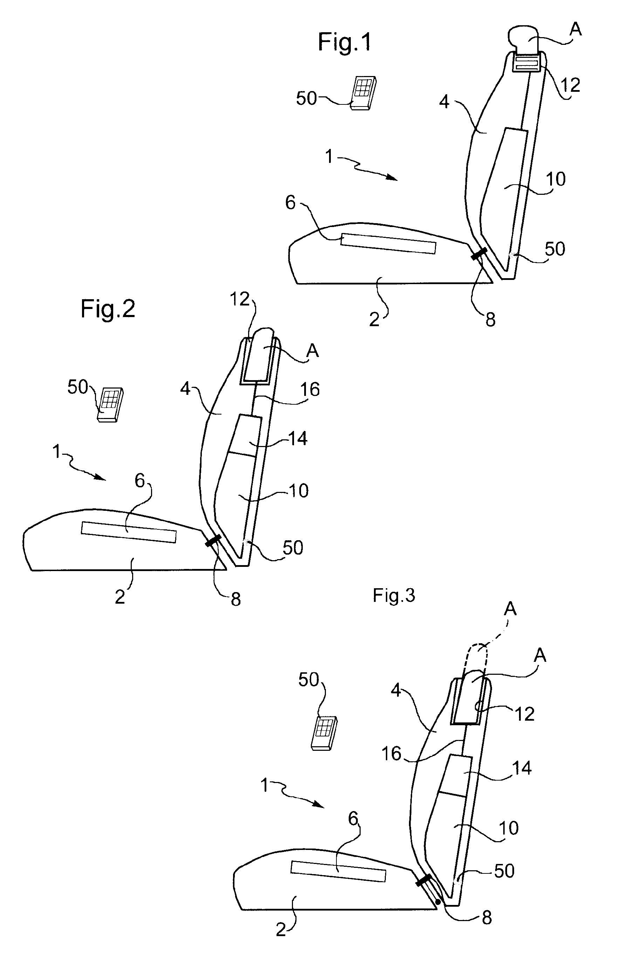

With reference to Figure 1, the inflation device 10 is connected to a headrest A which is accommodated in a housing 12 which is provided in the upper portion of the backrest 4.

With reference to the construction variant of Figure 2, the inflation device 10 is connected to a resilient bag (not illustrated) which is accommodated in a recess 14, the resilient bag actuating a support 16 which causes the rigid headrest A to exit from the housing 12 thereof.

With reference to Figure 3, the inflation device 10 is connected to a resilient bag (not illustrated) which is accommodated in a recess 14, bringing about the exit of the semirigid headrest A from the housing 12 by the support 16 being actuated; the headrest is then inflated.

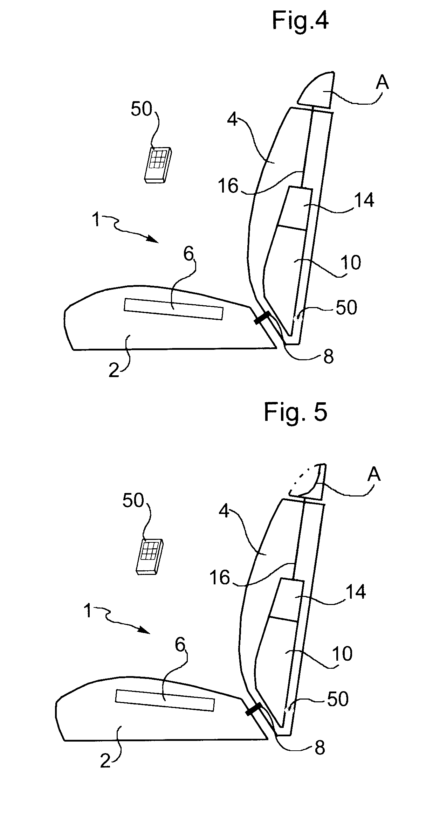

With reference to Figure 4, the headrest A is positioned by means of the support 16, actuated by the resilient bag which is contained in the recess 14.

With reference to the variant of Figure 5, the headrest A is positioned by means of the support 16 and the resilient bag, and then inflated by means of the device 10.

The operation of the headrest to which the present invention relates is as follows.

The inflation device provides for the inflation of the headrest A directly (Figure 1) or indirectly (Figures 3 and 5).

In the case of Figure 1, the headrest is inflated when it is still located in the housing thereof in the backrest, in an optimum position.

In the case of Figures 3 and 5, the inflation is effected by means of advance inflation of the resilient bag (not illustrated). The resilient bag also brings about the positioning of the headrest by means of the support 16 and the subsequent inflation thereof.

The device 6 controls the automatic inflation of the headrest A when it detects the presence, on the seat member 2, of a weight greater than a predetermined weight, for example, 40 kg.

In each case, it is possible to provide auxiliary means 50 which bring about or inhibit the inflation of the headrest A, independently of whether or not there is an occupant on the seat member.

The above makes clear the advantages of the headrest to which the present invention relates. The headrest is brought into an extended position only when necessary, actuation is simple to carry out, inflation may be effected by means of compressors, cylinders or with mixed systems.

There may be provided means for returning the headrest to its housing after use.

Naturally, the principle of the invention remaining the same, great variations may be applied to the above description and illustrations, without thereby departing from the scope of protection of the invention itself.

## Claims

1. A headrest for seats, **characterized in that** it is of the pneumatic positioning type.

2. A headrest for seats according to claim 1, **characterized in that** the positioning is effected by means of a support (16).

3. A headrest for seats according to claim 2, **characterized in that** the support (16) is actuated pneumatically by a pre-inflated resilient bag.

4. A headrest for seats according to claim 3, **characterized in that** the pre-inflated bag can be inflated by an inflation device (10).

5. A headrest for seats according to claim 4, **characterized in that** the inflation device (10) brings about the inflation of the headrest (A).
All as described and illustrated and for the purposes specified.
